# EUROPÄISCHE PATENTSCHRIFT

(11) **EP 1 210 194 B1**
(45) Veröffentlichungstag und Bekanntmachung des Hinweises auf die Patenterteilung: **01.12.2004**
(21) Anmeldenummer: 00947660.7
(22) Anmeldetag: 18.07.2000
(51) Int. Cl.: B22F 5/08, F16D 23/02, B21K 1/30

(54) **VERFAHREN ZUM PULVERMETALLURGISCHEN HERSTELLEN EINES KUPPLUNGSKÖRPERS**
METHOD FOR PRODUCING A COUPLING BODY BY POWDER-METALLURGY
PROCEDE POUR PRODUIRE SELON LA TECHNIQUE DE LA METALLURGIE DES POUDRES UN CORPS D'ACCOUPLEMENT

(30) Priorität: 29.07.1999 AT 131199
(43) Veröffentlichungstag der Anmeldung: 05.06.2002
(73) Patentinhaber: Miba Sintermetall Aktiengesellschaft, 4663 Laakirchen (AT)
(72) Erfinder: GRUNDNER, Alois, A-4653 Eberstalzell (AT)
(74) Vertreter: Hübscher, Helmut, Dipl.-Ing.
(86) Internationale Anmeldenummer: PCT/AT2000/000199
(87) Internationale Veröffentlichungsnummer: WO 2001/008838

(56) Entgegenhaltungen:
- DE-A- 3 839 800
- FR-E- 67 459

## Beschreibung

Die Erfindung bezieht sich auf ein Verfahren zum pulvermetallurgischen Herstellen eines Kupplungskörpers mit einem Kranz von Kupplungszähnen, deren von keilförmigen Stirnflächen ausgehende Flanken rückgenommen sind, wobei ein Formling mit Kupplungszähnen, die keilförmige Stirnflächen, aber achsparallele Flanken aufweisen, aus einem Sinterpulver gepreßt und zu einem Rohling gesintert wird, dessen Kupplungszähne zur Ausbildung der Flankenrücknahmen einer axialen Preßformung zwischen zwei Formwerkzeugen einerseits für die keilförmigen Stirnflächen und anderseits für die Flankenrücknahmen unterworfen werden.

Kupplungskörper für Schaltgetriebe von Kraftfahrzeugen weisen einen Kranz von Kupplungszähnen auf, die mit den Klauen einer Schaltmuffe zusammenwirken. Zu diesem Zweck bilden die Kupplungszähne auf der der Schaltmuffe zugewandten Seite dachartig verlaufende, keilförmige Stirnflächen, die das Eingreifen der Klauen der Schaltmuffe in den Zahnkranz des Kupplungskörpers erleichtern. Durch eine Flankenrücknahme der Kupplungszähne wird die Eingriffsstellung gesichert. Um ein spanabhebendes Bearbeiten der keilförmigen Stirnflächen und der Flankenrücknahmen zu vermeiden, wurde bereits vorgeschlagen (DE 38 39 800 A1), diese Kupplungskörper pulvermetallurgisch herzustellen, wobei aus einem Sinterpulver ein Formling mit Kupplungszähnen gepreßt wird, die zwar keilförmige Stirnflächen, aber achsparallele Flanken aufweisen. Nach einem Sintervorgang wird der Rohling zwischen zwei Formwerkzeugen kalibriert, und zwar unter gleichzeitiger Ausbildung der Flankenrücknahmen der Kupplungszähne. Zu diesem Zweck wird der Rohling in das einen Unterstempel bildende Formwerkzeug für die keilförmigen Stirnflächen eingelegt, bevor der Oberstempel, der die für die Flankenrücknahmen erforderliche Negativform aufweist, gegen den Unterstempel gepreßt wird, wobei die Flanken der Kupplungszähne durch eine entsprechenden Preßverformung rückgenommen werden. Nachteilig bei diesem bekannten Herstellungsverfahren ist allerdings, daß die Teilungsebene zwischen den Formwerkzeugen die Gefahr eines gratartigen Überstandes im Übergangsbereich zwischen den keilförmigen Stirnflächen und den Flankenrücknahmen mit sich bringt, so daß diese Kupplungskörper einer Nachbearbeitung unterworfen werden müssen, um gratfreie Kupplungszähne sicherstellen zu können.

Der Erfindung liegt somit die Aufgabe zugrunde, ein Verfahren zum pulvermetallurgischen Herstellen eines Kupplungskörpers mit einem Kranz von Kupplungszähnen der eingangs geschilderten Art so auszugestalten, daß mit der Preßformung des gesinterten Rohlings zur Ausbildung der Flankenrücknahmen der mechanische Formungsvorgang abgeschlossen werden kann, so daß sich auf die Form beziehende Nachbearbeitungen erübrigen.

Die Erfindung löst die gestellte Aufgabe dadurch, daß beim Formpressen der Flankenrücknahmen im Übergangsbereich zwischen den Flanken und den keilförmigen Stirnflächen eine flankenseitig einspringende, in der Teilungsfläche der Formwerkzeuge liegende Schulter mit einem abgerundeten Übergang zu den keilförmigen Stirnflächen in die Flanken der Kupplungszähne eingedrückt wird.

Durch das Eindrücken einer flankenseitig einspringenden Schulter, kann im Übergangsbereich von den keilförmigen Stirnflächen zu den Flanken kein die Eingriffsbewegung der Klauen der Schaltmuffe beeinträchtigende, gratartige Materialanhäufung auftreten, zumal bei der Formpressung für einen abgerundeten Übergang der in der Teilungsebene der Formwerkzeuge liegenden Schulter zu der anschließenden keilförmigen Stirnfläche gesorgt wird, so daß ein für den Schaltvorgang vorteilhafter, stetiger Übergang von den keilförmigen Stirnflächen zu den Schulterbereichen sichergestellt werden kann. Wesentlich ist, daß durch das Eindrücken der einspringenden Schultern eine Materialanhäufung in diesem Bereich verhindert wird, wobei das elastische Verhalten des Werkstoffes weitgehend unberücksichtigt bleiben kann, zumal die einspringenden Schultern selbst auf die Eingriffsbewegung der Klauen der Schaltmuffe in den Kranz der Kupplungzähne keinen Einfluß mehr haben.

Da die flankenseitig eingedrückten Schultern lediglich eine in die Bahn der Klauen der Schaltmuffe vorstehende Materialanhäufung vermeiden sollen, kann die Eindringtiefe des die Schultern bildenden Werkzeuges vergleichsweise gering ausfällen. Es muß allerdings ein ausreichender Schulterabsatz erzielt werden, um auch unter Bedingungen einer Serienfertigung die angestrebte Wirkung sicherzustellen. Aus diesem Grunde empfiehlt es sich, die Schultern im Übergangsbereich zwischen den Flanken und den keilförmigen Stirnflächen der Kupplungszähne mit einer Mindesthöhe von 0,01 mm einzudrücken, wobei sich ein vorteilhafter Bereich bis 0,1 mm für die an den Formwerkzeugen meßbare Schulterhöhe ergibt.

Anhand der Zeichnung wird der Erfindungsgegenstand näher erläutert. Es zeigen
Fig. 1 einen mit Hilfe des erfindungsgemäßen Verfahrens herzustellenden Kupplungskörper in einem vereinfachten Axialschnitt,
Fig. 2 einen Schnitt durch einen Kupplungszahn gemäß der Linie II-II der Fig. 1 in einem größeren Maßstab,

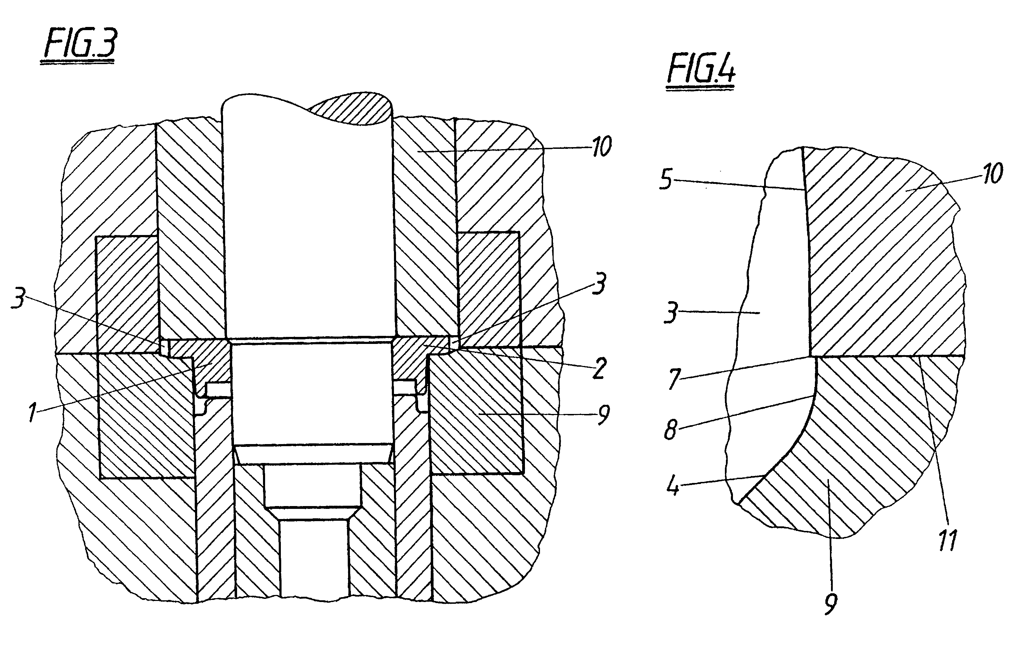

Fig. 3 eine Preßvorrichtung zum Preßformen eines Kupplungskörpers gemäß der Fig. 1 ausschnittsweise in einem vereinfachten Axialschnitt und
Fig. 4 einen Kupplungszahn ausschnittsweise im Bereich des Überganges von einer keilförmigen Stirnfläche zur Flanke innerhalb der geschlossenen Formwerkzeuge in einer Draufsicht auf die Kopffläche in einem stark vergrößerten Maßstab.

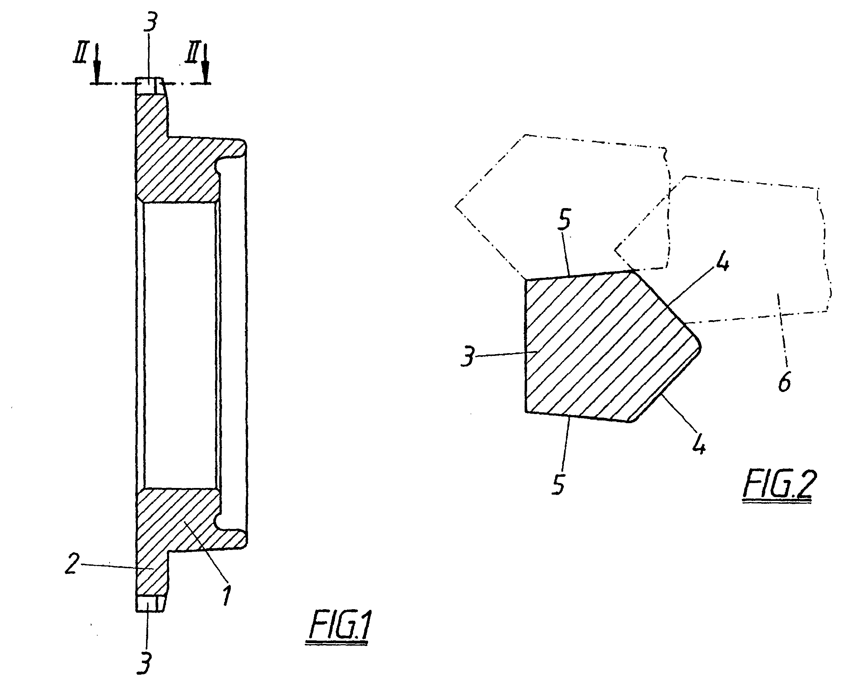

Wie den Fig. 1 und 2 entnommen werden kann, weist der herzustellende Kupplungskörper 1 einen Kranz 2 aus Kupplungszähnen 3 auf, die auf der einen Stirnseite dachartig verlaufende, keilförmige Stirnflächen 4 bilden, an die sich Flanken 5 mit einer ausgeprägten Flankenrücknahme von beispielsweise 4° anschließen. Die keilförmigen Stirnflächen 4 erleichtern den Kupplungsvorgang über eine Schaltmuffe, deren Klauen 6 entlang dieser Stirnflächen 4 in die Eingriffsstellung verschoben werden können, in der die Flankenrücknahmen ein unbeabsichtigtes Ausrücken der Schaltverbindung verhindern. Wie aus den strichpunktiert eingezeichneten Klauenstellungen der Fig. 2 entnommen werden kann, würde ein Grat oder eine Materialanhäufung im Übergangsbereich zwischen den keilförmigen Stirnflächen 4 und den rückgenommenen Flanken 5 den Kupplungsvorgang behindern, so daß eine solche Gratausbildung bei der Fertigung des Kupplungskörpers 1 vermieden werden muß, wenn nicht eine aufwendige Nachbearbeitung des Kupplungszahnkranzes 2 in Kauf genommen werden soll. Zu diesem Zweck wird gemäß der Fig. 4 im Übergangsbereich von den keilförmigen Stirnflächen 4 zu den Flanken 5 eine flankenseitig einspringende Schulter 7 eingedrückt, die mit einem gerundeten Übergang 8 einen stetigen Verlauf zu den keilförmigen Stirnflächen 4 bietet.

Diese Schultern 7 werden zusammen mit den Flankenrücknahmen durch eine Preßformung eines gesinterten Rohlings bei dessen Kalibrierung hergestellt, wobei aufgrund des elastischen Werkstoffverhaltens die an den Kupplungszähnen 3 nach der Herstellung des Kupplungskörpers 1 feststellbare Schultereinprägung kaum sichtbar ausfallen kann. Der Rohling, der Kupplungszähne 3 mit achsparallelen Flanken aufweist, wird in eine Preßvorrichtung eingelegt, deren Unterstempel ein Werkzeug 9 für die Kalibrierung der keilförmigen Stirnflächen 4 zusammen mit der Übergangsrundung 8 und deren Oberstempel ein Formwerkzeug 10 für die Flankenrücknahme und die einspringende Schulter 7 bilden. Wie der Fig. 4 entnommen werden kann, liegt die flankenseitig einspringende Schulter 7 in der Teilungsfläche 11 zwischen den Formwerkzeugen 9 und 10, so daß mit dem Formpressen der Flankenrücknahme auch die Schultern 7 eingedrückt werden. Mit diesem Formpressen der Flankenrücknahme wird der Kupplungskörper 1 zugleich innerhalb des sich zwischen den beiden Formwerkzeugen 9 und 10 ergebenden Gesenks kalibriert, so daß der Kupplungskörper 1 nach dem Auswerfen aus der Preßvorrichtung seine Endform aufweist. Um die notwendige Härte sicherzustellen, kann der Kupplungskörper 1 nach seiner Kalibrierung nochmals gesintert oder einer Wärmebehandlung zugeführt werden. Zu diesem Zweck kann der Kupplungskörper bereits mit einem Gangrad verbunden werden, um mit diesem Gangrad gemeinsam der Wärmebehandlung ausgesetzt zu werden.

## Patentansprüche

1. Verfahren zum pulvermetallurgischen Herstellen eines Kupplungskörpers (1) mit einem Kranz (2) von Kupplungszähnen (3), deren von keilförmigen Stimflächen (4) ausgehende Flanken (5) rückgenommen sind, wobei ein Formling mit Kupplungszähnen (3), die keilförmige Stirnflächen (4), aber achsparallele Flanken (5) aufweisen, aus einem Sinterpulver gepreßt und zu einem Rohling gesintert wird, dessen Kupplungszähne (3) zur Ausbildung der Flankenrücknahmen einer axialen Preßformung zwischen zwei Formwerkzeugen (9, 10) einerseits für die keilförmigen Stirnflächen (4) und anderseits für die Flankenrücknahmen unterworfen werden, **dadurch gekennzeichnet, daß** beim Formpressen der Flankenrücknahmen im Übergangsbereich zwischen den Flanken und den keilförmigen Stirnflächen eine flankenseitig einspringende, in der Teilungsfläche der Formwerkzeuge liegende Schulter mit einem abgerundeten Übergang zu den keilförmigen Stirnflächen in die Flanken der Kupplungszähne eingedrückt wird.

2. Verfahren nach Anspruch 1, **dadurch gekennzeichnet, daß** die Schulter im Übergangsbereich zwischen den Flanken und den keilförmigen Stirnflächen der Kupptungszähne mit einer Mindesthöhe von 0,01 mm eingedrückt wird.

## Claims

1. A process for the powder metallurgy production of a coupling body (1) with a ring (2) of coupling teeth (3), the flanks (5) of which, which start from wedge-shaped end faces (4), are tapered, wherein a moulding with coupling teeth (3), which have wedge-shaped end faces (4) but axis-parallel flanks (5), is pressed from a sinter powder and sintered to form a blank, the coupling teeth (3) of which are subjected, for the purpose of forming the flank tapers, to an axial compression moulding between two moulding tools (9, 10) on the one hand for the wedge-shaped end faces (4) and on the other hand for the flank tapers, **characterised in that** during the mould compression of the flank tapers, a shoulder re-entrant on the flank side and situated in the dividing surface of the moulding tools and having a rounded transition to the wedge-shaped end faces is pressed, in the transition zone between the flanks and the wedge-shaped end faces, into the flanks of the coupling teeth.

2. A process according to claim 1, **characterised in that** the shoulder is pressed in in the transition zone between the flanks and the wedge-shaped end faces of the coupling teeth with a minimum height of 0.01 mm.

## Revendications

1. Procédé pour produire, en faisant appel à la métallurgie des poudres, un corps d'accouplement (1), avec une couronne (2) formée de dents d'accouplement (3), dont les flancs (5), partant de faces frontales (4) cunéiformes, sont en retrait, une ébauche de forme, ayant des dents d'accouplement (3) qui présentent des faces frontales (4) cunéiformes mais des flancs (5) parallèles à l'axe, étant pressée à partir d'une poudre de frittage et frittée pour produire une ébauche, dont les dents d'accouplement (3) sont soumises, pour réaliser les retraits de flancs, à un formage par pressage axial entre deux outils de formage (9,10), d'une part, pour les faces frontales (4) cunéiformes et, d'autre part, pour les retraits de flancs, **caractérisé en ce que**, lors du pressage de formage des retraits de flancs, dans la zone de transition, entre les flancs et les faces frontales cunéiformes, est creusé par pressage un épaulement, en creux côté flanc, situé dans la face de division des outils de formage, avec une transition arrondie vers les faces frontales cunéiformes en donnant les flancs des dents d'accouplement.

2. Procédé selon la revendication 1, **caractérisé en ce que** l'épaulement est creusé par pressage, avec une hauteur minimale de 0,01 mm, dans la zone de transition entre les flancs et les faces frontales cunéiformes des dents d'accouplement.
